(19) **Europäisches Patentamt**

**European Patent Office**

**Office européen des brevets**

(11) Veröffentlichungsnummer: **0 140 345**
**B1**

# (12) EUROPÄISCHE PATENTSCHRIFT

(45) Veröffentlichungstag der Patentschrift:
**15.07.87**

(21) Anmeldenummer: **84112901.8**

(22) Anmeldetag: **25.10.84**

(51) Int. Cl.⁴: **B 60 C 29/00**

(54) **Ventilkappe mit Druckminderungsanzeige für Luftreifen.**

(30) Priorität: **28.10.83 DE 3339095**
**19.06.84 DE 3422725**

(43) Veröffentlichungstag der Anmeldung:
**08.05.85 Patentblatt 85/19**

(45) Bekanntmachung des Hinweises auf die Patenterteilung:
**15.07.87 Patentblatt 87/29**

(84) Benannte Vertragsstaaten:
**AT BE CH DE FR GB IT LI LU NL SE**

(56) Entgegenhaltungen:
**FR - E - 64 792**
**GB - A - 27 686**

(73) Patentinhaber: **Elektron Styria Technische**
**Serienprodukte Ges.m.b.H., Südliches Lazarettfeld 36,**
**A-8020 Graz (AT)**

(72) Erfinder: **Achterholt, Rainer, Paul-Zoll-Str. 3,**
**D-8963 Waltenhofen 1 (DE)**

(74) Vertreter: **Tischer, Herbert, Dipl.-Ing. et al,**
**Patentanwälte Dipl.-Ing. Herbert Tischer Dipl.-Ing.**
**Wolfgang Kern Albert-Rosshaupter-Strasse 73,**
**D-8000 München 70 (DE)**

ACTORUM AG

## Beschreibung

Die Erfindung betrifft eine Ventilkappe für Luftreifen gemäss dem Oberbegriff des Anspruchs 1 mit einer auf das Ventilrohr aufschraubbaren Hülse, die ein Betätigungsglied aufweist, welches in der aufgeschraubten (Arbeits-) Stellung der Hülse das im Ventilrohr eingebaute Ventil zu öffnen vermag, mit einer, mit dem Reifeninneren über das offene Ventil kommunizierenden Druckluftkammer, die durch eine bewegliche Membran oder einen Kolben gegenüber dem Umgebungsdruck abdichtbar ist, die bzw. der ein Anzeigeglied betätigt, dem ein hierzu bewegbares Markierungsglied zugeordnet ist, und ferner mit einer in Richtung auf das Betätigungsglied vorgespannten, mit dem Anzeigeglied zusammenwirkenden Feder.

Eine Ventilkappe dieser Art ist im wesentlichen aus der deutschen Offenlegungsschrift 2 627 529 bekannt. Die Anzeigevorrichtung der bekannten Ventilkappe besteht aus dem eigentlichen Anzeigeglied, nämlich aus einer drehbaren, mit einer hervorstehenden Nase versehenen Scheibe, die an einer Welle befestigt ist, welche mit seitlich wegstehenden Zapfen in einen Gewindegang eines hohlen Stellgliedes eingreift. Eine von der Membran verursachte, axiale Verstellung des Stellgliedes verursacht eine angepasste Verschwenkung der Scheibennase. Am Hülsenumfang ist ein Drehring mit einer Markierungsnase verstellbar angebracht. Nachdem die bekannte Ventilkappe auf das Ventilrohr aufgeschraubt worden ist, beaufschlagt der Reifendruck auch die Druckluftkammer. Die sich dabei ausdehnende Membran hebt das Stellglied an, wobei die Welle gedreht wird, bis sich Druckkraft und Federkraft die Waage halten. Nun muss von Hand die Markierungsnase so gedreht werden, dass sie mit der Scheibennase zur Deckung kommt. Fällt der Reifendruck ab, besorgt das Stellglied eine Verdrehung der Welle mit entsprechender Verschwenkung der Scheibennase. Der sich daraufhin zwischen den beiden Nasen einstellende Drehwinkel bildet ein Mass für den Druckverlust.

Da solche Ventilkappen einen Durchmesser von nur etwa 10 mm und etwa die doppelte Länge aufweisen, verbleibt nur wenig Raum für die Einbauten. Dennoch erfordert das Getriebe zur Umsetzung der Axialbewegung in eine Drehbewegung hohe Genauigkeit und bleibt gleichwohl störanfällig. Nachteilig ist vor allem, dass die naturgemäss relativ kleine Markierungsnase von Hand an der bereits auf das Reifenventil aufgeschraubten — also schwer zugänglichen — Ventilkappe zur Deckung mit der Scheibennase gebracht werden muss. Wird vergessen, den Markierungsring nach jeder Reifendruckprüfung erneut einzustellen, so tritt eine Fehlanzeige auf.

Bei einem Reifendruckprüfgerät ist bereits eine Rückbewegungssperre für das Anzeigeglied bekannt (vgl. deutsches Patent 396 474). Dort weist das Anzeigeglied eine Sperrklinkenverzahnung auf, die lediglich ein Ausfahren des Anzeigegliedes erlaubt, jedoch dessen Rückbewegung verhindert. Das Prüfgerät muss vom Ventilrohr angenommen werden, bevor — nach Betätigung einer Feder — das Anzeigeglied wieder in seine Ausgangsstellung zurückgestellt werden kann.

Weiterhin ist aus der deutschen Offenlegungsschrift 3 104 081 ein Druckprüfgerät für Druckluftreifen bekannt, bei welchem der aktuelle Reifendruck durch den Zustand einer aufblasbaren Membran angezeigt wird. Hierzu ist ein Ende einer auf das Reifenventil aufschraubbaren Hülse dicht mit einer Kuppel aus durchsichtigem Material verschlossen. Eine druckabhängige Deformation der Membran ist durch diese durchsichtige Kuppel hindurch sichtbar, und ein Beobachter schliesst aus dem Grad der Deformation der Membran auf den Luftdruck des Reifens.

Aufgabe der vorliegenden Erfindung ist es, eine Ventilkappe der aus der DE-OS 2 627 529 bekannten Art zu schaffen, die einfacher und störungssicherer ausgebildet ist, und bei der das Markierungsglied mit weniger Mühe in eine definierte Ausgangsstellung zum Anzeigeglied bringbar ist.

Ein weiteres Ziel der vorliegenden Erfindung besteht darin, zusätzlich Sicherheit gegen Entweichen von Luft aus dem Reifen bei einer Beschädigung der Membran bzw. des Kolbens oder von deren Abdichtung gegenüber der Hülse zu schaffen.

Die erfindungsgemässe Lösung dieser Aufgabe ist dadurch gekennzeichnet, dass bei einer Ventilkappe mit den oben angegebenen Merkmalen bei einer Druckerhöhung in der Druckluftkammer das Anzeigeglied eine axiale Verschiebung gegenüber der Hülse ausführt, und hierbei das Markierungsglied mitnehmbar ist, und weiterhin eine Rückbewegungssperre das Markierungsglied bei einer Druckminderung in der Druckluftkammer in seiner Stellung gegenüber der Hülse festhält, während das Anzeigeglied in axialer Richtung gegenüber der Hülse auf das Betätigungsglied zu verschoben wird.

Gegenüber dem aus der DE-OS 2 627 529 vorbekannten Vorschlag ist der Aufbau der erfindungsgemässen Ventilkappe einfacher, weil ein Umsetzungsgetriebe entfällt. Das Markierungsglied wird — soweit überhaupt erforderlich — vor dem Aufschrauben der Ventilkappe auf das Ventilrohr des aufgepumpten Reifens axial bis zum Anschlag eingeschoben. Diese Einstelloperation kann praktisch blind ausgeführt werden, und erfordert keine besondere Aufmerksamkeit. Nach dem Aufschrauben der Ventilkappe bewegt das Anzeigeglied das Markierungsglied selbsttätig in dessen Ausgangsstellung. Soweit das an der Hülse angebrachte Betätigungsglied das im Ventilrohr des Reifens eingebaute Ventil ständig offenhält, sind irgendwelche Manipulationen an der auf das Reifenventil aufgeschraubten Ventilkappe nicht erforderlich. Fällt der Reifendruck gegebenenfalls ab, wird unter der Wirkung der Feder allein das Anzeigeglied auf das Betätigungsglied zu bewegt, während die Rückbewegungssperre das Markierungsglied weiterhin in seiner Ausgangsstellung festhält. Es resultiert eine Veränderung des relativen Axialabstandes beider Glieder, die zur Anzeige eines Druckverlustes verwendet werden kann. Insbesondere bei unterschiedlicher Farbgebung beider Glieder ist diese Änderung des Axialabstandes auch aus grösserer Entfernung gut erkennbar.

Die Rückbewegungssperre kann auch bei der erfindungsgemässen Ventilkappe formschlüssig, z.B. nach dem aus der DE-PS 396 474 bekannten Sperrklinkenprinzip arbeiten. Eine einfachere und überlegenere Alternative besteht jedoch darin, die Rückbewegungssperre als kraftschlüssige Bremse auszubilden, die gemäss einer weiteren Ausgestaltung der Erfindung aus einem elastisch verformbaren Ring besteht, durch den das Anzeigeglied mit Spiel, das Markierungsglied jedoch mit Reibschluss hindurchragen. In diesem Fall kann der Ring die Hülse stirnseitig abschliessen, so dass eine zusätzliche Stirnplatte entbehrlich wird.

Obwohl die Anzeige vorzugsweise an der Hülsenstirnseite vorgesehen ist, könnte sie alternativ auch am Hülsenumfang angebracht werden. Beispielsweise könnten zwei nebeneinanderliegende Axialschlitze vorgesehen werden, durch deren einen eine Nase des Anzeigegliedes hindurchragt, während im anderen Axialschlitz eine Nase des Markierungsgliedes geführt ist. Beide Nase liegen im Hülseninneren in der Bewegungsbahn eines, von der Membran betätigten Stellgliedes an. Bei einer Druckbeaufschlagung der Druckluftkammer verschiebt die Membran das Stellglied, und das Stellglied nimmt — entgegen der Federwirkung — beide Nasen mit, bis sowohl das Anzeigeglied wie das Markierungsglied die dem Reifendruck entsprechende Stellung einnehmen. Auf einen gegebenenfalls erfolgenden Abfall des Reifendruckes hin folgt das Anzeigeglied unter der Wirkung der Feder der entsprechenden Verstellung der Membran bzw. des Kolbens, während das Markierungsglied von der Rückbewegungssperre in seiner Ausgangsstellung festgehalten wird.

Bei einer bevorzugten Ausführungsform kann das zum Ventil entfernt angeordnete Ende der Hülse durch eine hutartige, das Ausrücken von Anzeigeglied und Markierungsglied zulassende Abdeckung aus durchsichtigem Material dicht verschlossen sein, sofern zusätzlich dafür gesorgt wird, dass bei völliger Druckentlastung der Druckluftkammer eine Rückstellmöglichkeit des Markierungsgliedes gegeben ist.

Weil die hutartige Abdeckung das zum Ventil entfernt angeordnete Ende der Ventilkappe dicht verschliesst, kann selbst bei einer Zerstörung der Membran bzw. des Kolbens oder bei einer Beschädigung der Abdichtung zwischen Membran und Hülse keine Luft aus dem Luftreifen entweichen, der mit einer solchen Ventilkappe ausgerüstet ist. Die hutartige Abdeckung besteht aus durchsichtigem Material und lässt weiterhin die gegenseitige Verstellung von Anzeigeglied und Markierungsglied erkennen, um einen gegebenenfalls auftretenden Druckabfall im Reifen anzuzeigen.

Die hutartige Abdeckung kann einen Hutabschnitt und einen einstückig damit ausgebildeten Rohrabschnitt aufweisen, und der Rohrabschnitt kann in die Ventilhülse eingesetzt werden. In einem solchen Falle wird die Aussenwand des Rohrabschnittes mit der Innenwand der Hülse vorzugsweise wenigstens in einer umlaufenden Ringzone verschweisst, um einen druckdichten Verschluss der Ventilkappe zu gewährleisten.

Dieser Rohrabschnitt kann eine solche Länge aufweisen, dass das offene Ende des Rohrabschnittes den Randwulst der Membran gegen eine Querwand oder gegen einen nach innen vorspringenden Ansatz der Hülse drückt. Auf diese Weise kann der Rohrabschnitt zusätzlich die Funktion eines Haltegliedes für die Membran ausüben, wodurch hierfür ein selbständiges und getrenntes Bauteil eingespart wird.

Nach einer weiteren vorteilhaften Ausgestaltung kann der Hutabschnitt der Abdeckung im wesentlichen die Gestalt eines sich in Richtung auf den Rohrabschnitt hin geringfügig erweiternden Hohlkegelabschnittes aufweisen. Das Herausschieben des Anzeigegliedes drückt schliesslich das vom Ventil entfernte Ende des Markierungsgliedes gegen die Innenwand dieses Hutabschnittes, wenn das Markierungsglied seine Ausgangsstellung einnimmt. In dieser Ausgangsstellung wird das Markierungsglied von dieser Innenwand festgeklemmt bzw. im Reibschluss gehalten. Auf diese Weise kann die Innenwand des Hutabschnittes zusätzlich die Funktion der Rückbewegungssperre ausüben, so dass auch hierfür ein selbständiges, getrenntes Bauteil entfallen kann. Hierdurch wird die Anzahl der getrennt zu habenden Bauteile verringert, was insbesondere die Massenstellung der Ventilkappe erleichtert und verbilligt.

Auch bei einer geschlossenen Ventilkappe muss eine Rückführmöglichkeit des Markierungsgliedes aus dessen Ausgangsstellung gegeben sein, um die Ventilkappe nicht nach einmaligem Gebrauch verwerfen zu müssen. Im einfachsten Falle kann diese Rückführmöglichkeit durch eine ausreichende Masse des Markierungsgliedes gewährleistet werden. Zur Rückführung des Markierungsgliedes wird die Ventilkappe vom Ventil abgeschraubt und mehrmals gegen eine harte Unterlage geklopft, bis sich das Markierungsglied wieder zurückgeschoben hat.

Alternativ kann die bei völliger Druckentlastung der Druckluftkammer unter der Wirkung der Feder erfolgende Verstellung des Anzeigegliedes selbsttätig auch eine wenigstens teilweise Rückführung des Markierungsgliedes bewirken. Zu diesem Zweck kann am Markierungsglied eine in axialer Richtung verlaufende, längliche Aussparung vorgesehen sein, in welche ein fest mit dem Anzeigeglied verbundener Vorsprung eingreift. Bei der völligen Druckentlastung der Druckluftkammer führt die Feder das Anzeigeglied zurück, und der Vorsprung greift am Ende der Aussparung an und nimmt das Markierungsglied mit, um dieses aus seinem Klemmsitz mit der Rückführungssperre zu lösen und wenigstens teilweise zurückzuführen. Die Länge der Aussparung im Markierungsglied ist ausreichend, um bei einer blossen Minderung des Reifendruckes eine teilweise Rückführung des Anzeigegliedes zu ermöglichen, ohne das Markierungsglied aus seiner Ausgangsstellung zurückzuführen. Bei Bedarf könnte auch die komplementäre Anordnung vorgesehen werden, mit einem Vorsprung am Markierungsglied, der in eine längliche Aussparung am Anzeigeglied eingreift.

Bei einer besonders bevorzugten Ausführungsform der erfindungsmässen Ventilkappe ist das Anzeigeglied im wesentlichen als Stangenabschnitt ausgebildet, der an einem Ende einen als Federsitz dienenden tellerförmigen Vorsprung aufweist. In axialer Richtung ist im Stangenabschnitt ein Schlitz ausgespart, in den ein gegenüber dem Stangenabschnitt verschiebliches, als Markierungsglied dienendes Plättchen eingesetzt ist, dessen Abmessungen im wesentlichen der Länge und Breite des Schlitzes entsprechen. Jedoch weist dieses Plättchen im Bereich der Stangenabschnitt-Stirnfläche zwei einander gegenüber angeordnete, über den Stangenquerschnitt vorstehende Ansätze auf, welche dann, nachdem das Anzeigeglied das Markierungsglied in dessen Ausgangsstellung verschoben hat, an der Innenwand der durchsichtigen, hutförmigen Abdeckung zur Anlage bingbar sind und dort das Markierungsglied im Reibschluss bzw. Klemmsitz festhalten. Vorzugsweise ist bei dieser Ausführungsform innerhalb des Plättchens ein Langloch ausgespart, und eine, in den Schlitz hineinragende Nase, oder ein, diesen Schlitz überbrückender Stift ragt in dieses Langloch hinein und führt bei einer völligen Rückführung des Anzeigegliedes das Markierungsglied wenigstens teilweise zurück.

Obwohl die ausdehnbare Membran oder der verschiebliche Kolben vorzugsweise unmittelbar auf das Anzeigeglied oder ein einstückig damit verbundenes Bauteil einwirken, kann alternativ ein Stellglied vorgesehen werden, auf welches die Membran bzw. der Kolben einwirkt, und das seinerseits das Anzeigeglied betätigt. Ein solches Stellglied kann funktionell oder kraftschlüssig mit der Membran bzw. dem Kolben verbunden sein. Alternativ kann das Stellglied ein unabhängiges, selbständiges Bauteil darstellen. In jedem Falle überträgt das Stellglied die bei Druckbeaufschlagung der Druckluftkammer auftretende axiale Verstellung der Membran oder des Kolbens auf das Anzeigeglied und verschiebt dieses — gemeinsam mit dem Markierungsglied — entgegen der Wirkung der Feder in axialer Richtung bezüglich der Hülse. Bei Bedarf kann ein aktives Stellglied vorgesehen werden, das eine bestimmte axiale Verstellung der Membran bzw. des Kolbens in eine mehrfache axiale Verschiebung des Anzeigegliedes umsetzt. Ein solches aktives Stellglied kann beispielsweise aus einer Winkelhebelanordnung bestehen, die in geeigneter Weise innerhalb der Hülse angelenkt ist. Weiterhin könnte ein Stellglied funktionell oder kraftschlüssig, insbesondere einstückig mit dem Anzeigeglied verbunden sein.

Innerhalb der Hülse der Ventilkappe befindet sich ein Betätigungsglied, welches das im Ventilrohr eingebaute Ventil des Luftreifens zu öffnen vermag, nachdem ein Innengewindeabschnitt der Hülse auf das Aussengewinde des Ventilrohres aufgeschraubt ist, bis sich die Hülse in ihrer Arbeitsstellung befindet. Dieses Betätigungsglied kann ein fest innerhalb der Hülse angebrachter Vorsprung sein, der in der Arbeitsstellung der Hülse das im Ventilrohr eingebaute Ventil ständig offenhält.

Alternativ kann dieses Betätigungsglied ein in axialer Richtung verschieblich innerhalb der Hülse angeordneter Zapfen sein, dessen gezielte Betätigung — nachdem die Hülse in ihre Arbeitsstellung gebracht worden ist — das im Ventilrohr eingebaute Ventil öffnet. Zur Betätigung kann beispielsweise ein Hebel vorgesehen sein, dessen eines Ende an dem Zapfen angelenkt ist, und dessen anderes Ende über den Umfang der Hülse herausgeführt und gegenüber dieser abgedichtet ist. Durch Verschwenken dieses herausgeführten Hebelendes kann eine Bedienungsperson gezielt das Reifenventil öffnen. Mit dieser oder einer ähnlich wirkenden Ausführungsform wird das im Ventilrohr eingebaute Ventil des Reifens nur so lange offengehalten, wie der Hebel oder dgl. betätigt wird.

Zur Erhöhung der Dichtigkeit zwischen dem Ventilrohr des Reifens und der aufgeschraubten Hülse kann innerhalb der Hülse ein Dichtungsring vorgesehen werden, der zwischen einer Querwand oder einer nach innen vorstehenden, umlaufenden Schulter der Hülse und der Stirnfläche des Ventilrohres einspannbar ist.

Nachstehend wird die Erfindung mehr im einzelnen anhand bevorzugter Ausführungsformen mit Bezugnahme auf die Zeichnungen erläutert; die letzteren zeigen:

Fig. 1 eine Schnittansicht einer Ausführungsform einer erfindungsgemässen Ventilkappe in Arbeitsstellung (ohne Druckabfall im Reifen);

Fig. 2 eine Schnittansicht analog Fig. 1, jedoch mit der Anzeige eines Druckabfalls im Reifen;

Fig. 3 eine Querschnittsansicht der Ventilkappe längs der Linie 3-3 aus Fig. 1;

Fig. 4 eine Schnittansicht einer weiteren Ausführungsform einer erfindungsgemässen Ventilkappe;

Fig. 5 eine Schnittansicht einer weiteren Ausführungsform einer erfindungsgemässen Ventilkappe;

Fig. 6 eine Schnittansicht einer weiteren Ausführungsform einer erfindungsgemässen Ventilkappe;

Fig. 7 das an der Innenwand der hutartigen Abdeckung festgeklemmte Markierungsglied der Ventilkappe nach Fig. 6; und

Fig. 8 eine Schnittansicht einer weiteren Ausführungsform einer erfindungsgemässen Ventilkappe.

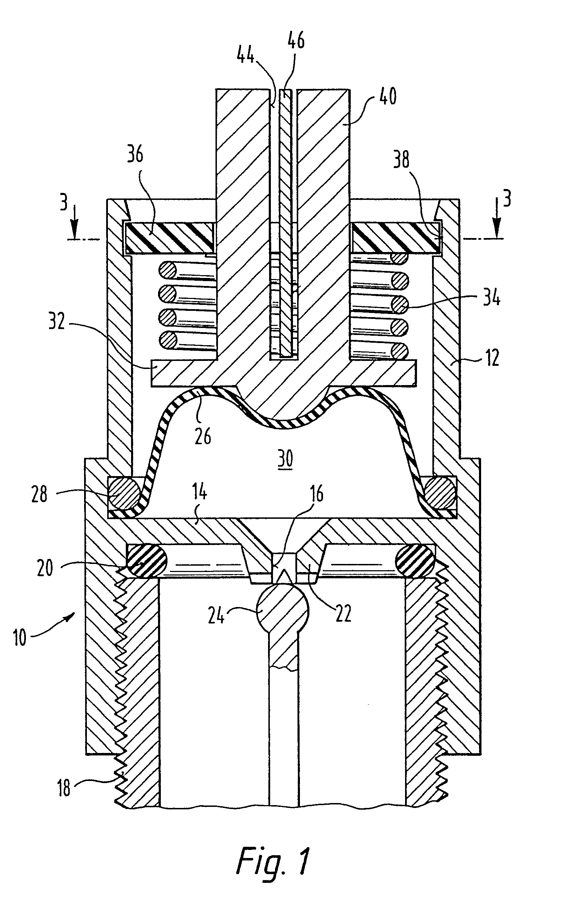

Zu den wesentlichen Bestandteilen der mit den Fig. 1, 2 und 3 dargestellten Ventilkappe gehören deren Hülse 12, die Membran 26, das Anzeigeglied 40, die Feder 34, das Markierungsglied 46 und die Rückbewegungssperre 36 für dieses Markierungsglied 46. Die Hülse 12 der in Fig. 1 dargestellten Ventilkappe 10 weist etwa in ihrer Längsmitte eine Querwand 14 auf, die eine zentrale, nach oben sich konisch erweiternde Bohrung 16 hat. Der untere Teil der Hülse 12 ist mit einem Innengewinde ausgerüstet, mit welchem die Ventilkappe 10 auf das schematisch dargestellte Ventilrohr 18 aufschraubbar ist. Ein zwischen eine Ringschulter der Hülse 12 und die Stirnfläche des Ventilrohres 18 eingeklemmter Dichtungsring 20 sorgt für die druckdichte Abdichtung der Ventilkappe 10 gegenüber dem Ventil. In dieser aufgeschraubten (Arbeits-) Stellung der Hülse 12 betätigt ein von der Querwand 14 nach unten abstehender Vorsprung 22 die Ventilstange 24 im Ventilrohr 18 und hält dieses Ventil ständig offen, so dass der im Reifen herrschende Druck über die Bohrung 16 die darüber befindliche Druckluftkammer 30 beaufschlagt. In der dargestellten Ausführungsform wird die Druckluftkammer 30 einerseits von der Querwand 14 und andererseits von einer Membran 26 begrenzt, wobei der Membranrand von einem Federring 28 druckdicht in einer Umfangsnut der Hülse 12 gehalten wird.

Alternativ könnte diese Membran 26 durch einen Kolben ersetzt sein, der innerhalb der Hülse in axialer Richtung verschieblich eingesetzt ist, wobei ein in eine Umfangsnut des Kolbens eingesetzter O-Ring eine druckdichte Abdichtung der Druckluftkammer gegenüber dem Umgebungsdruck gewährleistet.

In jedem Falle kommuniziert die Druckluftkammer 30 über die Bohrung 16 und das Ventilrohr 18 mit dem Reifeninnenraum, so dass innerhalb der Druckluftkammer 30 ebenfalls der Reifendruck herrscht, solange die Ventilstange 24 niedergedrückt ist.

Ein im wesentlichen stangeförmiges Anzeigeglied 40 weist an seinem unteren Ende einen Teller 32 auf, der an der Oberseite der Mambran 26 anliegt. Der vorstehende Rand des Tellers 32 bildet einen Federsitz für eine Schraubenfeder 34. Das gegenüberliegende Ende der Feder 34 ist an einem steifen, jedoch in gewissem Mass elastisch verformbaren Ring abgestützt, der in eine Umfangsnut 38 in der Innenwand am oberen Ende der Hülse 12 eingesetzt ist. Vom Teller 32 steht einstückig ein stangenförmiger Abschnitt nach oben ab, welcher das Anzeigeglied 40 bildet. Dieser stangenförmige Abschnitt ragt mit ausreichendem Radialspiel durch die Bohrung 42 im eingesetzten Ring 36 hindurch, so dass dieser Ring 36 das Anzeigeglied 40 unter Zulassung dessen freier Axialbewegung führt.

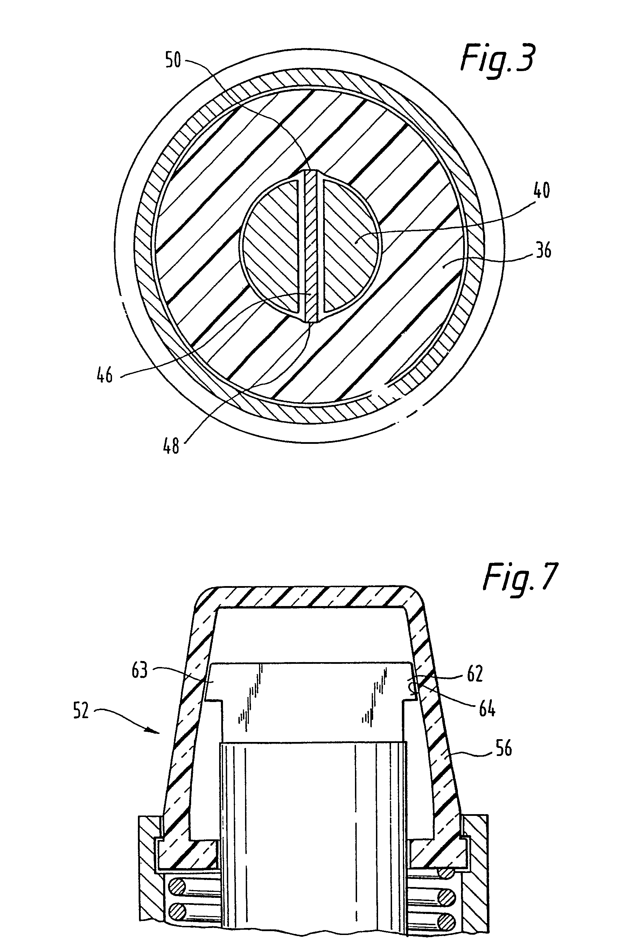

Im stangenförmigen Abschnitt des Anzeigegliedes 40 ist ein in axialer Richtung verlaufender Schlitz 44 ausgespart, der bis zum Niveau des Tellers 32 reichen kann. In diesem Axialschlitz 44 ist ein Markierungsglied 46 mit genügendem seitlichen Spiel für eine freie, relative Axialbewegung aufgenommen. Die Länge des Markierungsgliedes 40 entspricht der Länge des Axialschlitzes, und diese Länge beträgt ein Mehrfaches der — rechtwinklig zur Zeichenebene gedachten — Breite des Markierungsgliedes 46. Diese Markierungsgliedbreite beträgt wiederum ein Mehrfaches der Dicke des Markierungsgliedes 46. In der dargestellten Ausführungsform ist das Markierungsglied 46 ein dünnes Plättchen mit rechteckförmiger Kontur. Die Breite dieses Markierungsgliedes 46 ist geringfügig grösser als der Durchmesser des Anzeigegliedes 40, so dass das Markierungsglied beidseitig mit seinen parallelen Längsrändern aus dem Axialschlitz 44 herausragt und über die Umfangskontur des Anzeigegliedes 40 vorsteht. Die Breite des Markierungsgliedes 46 ist auch grösser als der Innendurchmesser der Bohrung 42 des Ringes 36, so dass der letztere im Bereich der vertikalen Stirnflächen des Markierungsgliedes 46 elastisch verformt, nämlich nach aussen gedrückt wird, wie in Fig. 3 bei 48 und 50 veranschaulicht ist.

Nachdem die Ventilkappe 10 auf das Ventilrohr 18 aufgeschraubt ist, steht die Druckluftkammer 30 unter dem Reifendruck, und die resultierende Verstellung der Membran 26 schiebt den oberen Abschnitt des Anzeigegliedes 40 so weit über das obere Hülsenende heraus, bis die Feder 34 eine entsprechende Gegenkraft erzeugt.

Die erfindungsgemässe Ventilkappe kann mit ein und derselben Feder für alle, mindestens aber die meisten im Gebrauch befindlichen Fahrzeuge verwendet werden, nämlich in einem Druckbereich zwischen 1,5 bar und 3 bar. Für Fahrradbereifungen kann eine etwas stärkere Feder eingesetzt werden, da hier Drücke in der Grössenordnung von 4 bar auftreten. Durch entsprechende Bemessung der Membran und der Feder kann auch eine für Lastwagenreifen geeignete Ausführungsform der Ventilkappe geschaffen werden.

Je nach dem Reifendruck stellt sich ein Gleichgewichtszustand zwischen der Druckkraft der elastischen, die Druckluftkammer 30 begrenzenden Membran 26 und der Federkraft der Feder 34 ein; entsprechend weit ist der obere Abschnitt des Anzeigegliedes 40 über das obere Ende der Hülse 12 hinaus ausgefahren. Wesentlich ist nun, dass ohne jeglichen Eingriff einer Bedienungsperson das Markierungsglied 46 selbsttätig in seine vom tatsächlichen Reifendruck abhängige Ausgangsstellung gebracht worden ist, weil dieses Markierungsglied 46 vom Anzeigeglied mitgenommen wird. Das Markierungsglied 46 wird stets vom elastischen Ring 36 so weit festgehalten, dass eine unerwünschte oder selbständige Verstellung des Markierungsgliedes 46 unterbunden ist. Bei der Aufwärtsbewegung des Anzeigegliedes 40 reicht die von der Membran 26 ausgehende Verstellkraft aus, die Reibungskräfte zwischen dem Markierungsglied 46 und dem elastischen Ring 36 zu überwinden, wenn das Markierungsglied 46 vom Boden des Axialschlitzes 44 mitgenommen wird. Das Markierungsglied 46 nimmt also mit hoher Präzision die in Fig. 1 dargestellte Ausgangs- oder Anzeigestellung ein, in welcher das Markierungsglied 46 und das Anzeigeglied 40 stirnseitig bündig abschliessen.

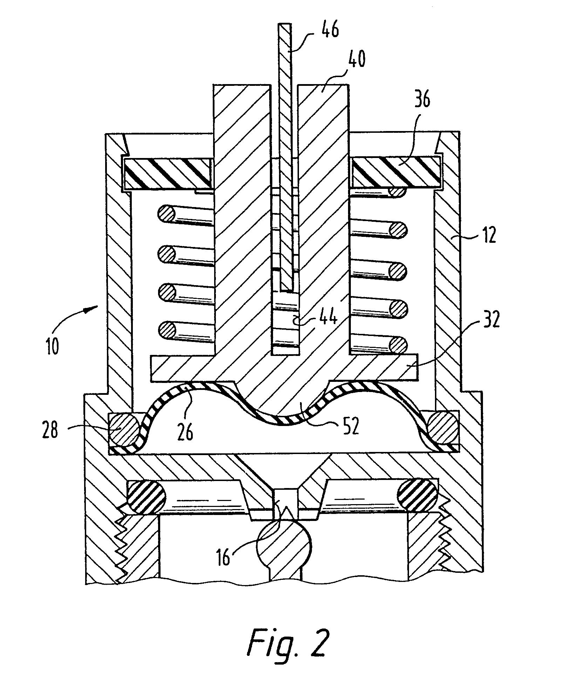

Fällt nun gegebenenfalls der Reifendruck ab, so folgt das Anzeigeglied 40 unter der Wirkung der Feder 34 der entsprechenden Verstellung der Membran 26, und wird um eine entsprechende Strecke in das Innere der Hülse 12 eingefahren, während das Markierungsglied 46 unter der Klemmwirkung des Ringes 36 seine Ausgangsstellung beibehält. Für den Betrachter ragt nun ein oberer Abschnitt des Markierungsgliedes 46 über die Stirnfläche des Anzeigegliedes 40 vor. Insbesondere, wenn beide Glieder in konträren Farben gehalten sind, ist dieser, einen Druckverlust des Reifens anzeigende Zustand, schon von weitem gut erkennbar. Eine entsprechende Stellung des Markierungsgliedes 46 und Anzeigegliedes 40 der Ventilkappe 10 ist in Fig. 2 dargestellt.

Ist die Druckabsenkung im Reifen bemerkt worden, so wird die Ventilkappe 10 abgeschraubt, und der Reifendruck erneut auf seinen Sollwert gebracht. An der vom Ventil gelösten Ventilkappe 10 wird das Markierungsglied wieder von Hand in den Axialschlitz 44 hineingedrückt, bis es an dessen Boden anliegt. Nach Luftauffüllung und erneutem Aufschrauben der Ventilkappe 10 auf das Ventilrohr 18 wird das Anzeigeglied 40 das Markierungsglied 46 erneut in dessen Ausgangsstellung bringen, und der elastische Ring 36 hält das Markierungsglied 46 in dessen Ausgangsstellung fest. Solange die Stirnflächen des Markierungsgliedes 46 und des Anzeigegliedes 40 eine bündige Anordnung einnehmen, in welcher — insbesondere bei geringer Stärke bzw. Dicke des Markierungsgliedes 46 — das Markierungsglied fast nicht erkennbar ist, kann der Benutzer davon ausgehen, dass der Reifendruck seinem Sollwert entspricht.

Die Membran 26 kann mittels des gezeigten Federringes 28 absolut zuverlässig und druckdicht an der Innenwand der Hülse 12 gehalten werden. Für den Ausnahmefall einer unzureichenden Abdichtung oder gar Zerstörung der Membran 26 kann ein völliges Entweichen der Luft aus dem Reifen dadurch verhindert werden, dass der an der Unterseite des Tellers 32 vorgesehene, kugelkalottenartige Vorsprung 52 die Membran 26 oder deren Reste in die konische Erweiterung der Bohrung 16 drückt und dadurch für einen Verschluss dieser Bohrung 16 sorgt. Da die Membran während des Betriebes kaum bewegt wird, ist sie auch nur geringen Beanspruchungen ausgesetzt. Sollte trotzdem eine Membran reissen, so findet dieser Riss in der Regel im Bereich der Einspannstelle statt, so dass der Mittelabschnitt die Notabdichtung weiterhin gewährleisten kann.

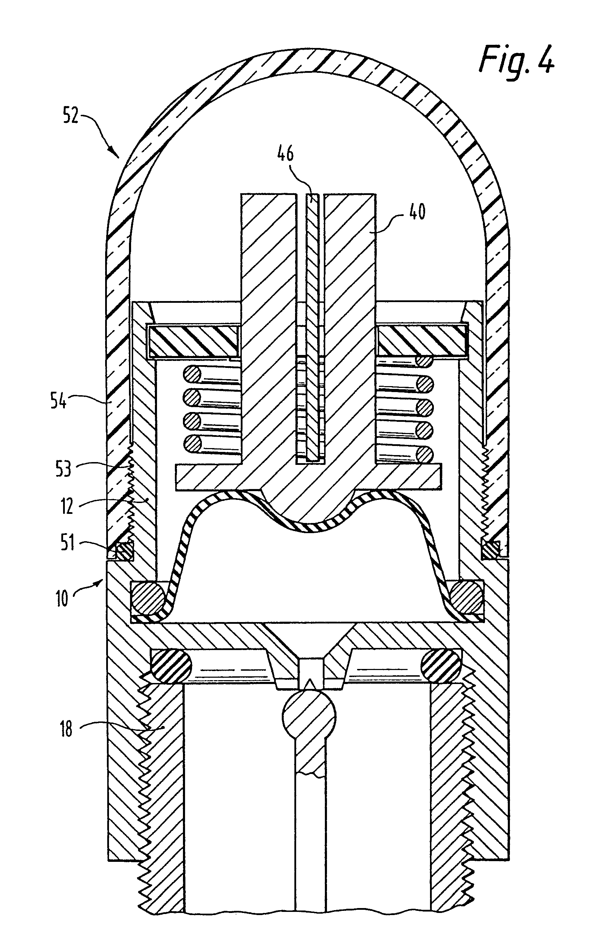

Die nachstehend mit Bezugnahme auf die Fig. 4 bis 8 erläuterten Ausführungsformen erfindungsgemässer Ventilkappen weisen eine hutartige, das Ausrücken von Anzeigeglied und Markierungsglied zulassende Abdeckung aus durchsichtigem Material auf, welche das zum Ventil entfernt angeordnete Ende der Hülse dicht verschliesst. Bei derartigen Ventilkappen ist selbst dann ein Entweichen der Luft aus dem Reifen ausgeschlossen, wenn eine Beschädigung der Membran oder des Kolbens auftritt, oder die Dichtigkeit der Abdichtung zwischen Membran oder Kolben und Hülseninnnenwand nicht länger gegeben ist.

Die Fig. 4 zeigte eine weitere Ausführungsform einer erfindungsmässen Ventilkappe. Die ansonsten gegenüber den Fig. 1, 2 und 3 unveränderte Ventilkappe 10 ist zusätzlich mit einer hutartigen Abdeckung 52 versehen, welche das vom Ventilrohr 18 entfernte Ende der Hülse 12 dicht verschliesst. Die hutartige Abdeckung 52 besteht aus klarem, durchsichtigem Material, beispielsweise einem bekannten Polyacrylat. Wie dargestellt, liegt die Abdeckung am Aussenumfang der Hülse 12 an und weist solche Abmessungen auf, dass die Ausrückung von Anzeigeglied 40 und Markierungsglied 46 unbehindert erfolgen kann.

Die Dichtigkeit der Abdeckung 52 gegenüber der Hülse 12 kann auf verschiedene Weise gewährleistet werden. Beispielsweise kann der Rohrabschnitt 54 der Abdeckung 52 einen geringfügig kleineren Innendurchmesser aufweisen als der Aussendurchmesser des oberen Abschnittes der Hülse 12, und die Abdeckung 52 sitzt nach elastischer Verformung stramm und dicht auf diesem oberen Hülsenabschnitt. Zusätzlich könnte ein Dichtungsfalz vorgesehen werden. Vorzugsweise ist eine Gewindeverbindung vorgesehen, wie das schematisch bei 53 angedeutet ist. In diesem Falle kann die Abdeckung 52 abgeschraubt werden, um bei Bedarf das Markierungsglied 46 aus seiner Ausgangsstellung zurückzuschieben. Ein im Bereich der Stirnflächen eingesetzter weiterer Dichtungsring 51 gewährleistet die Dichtigkeit. Nach einer weiteren alternativen Ausführungsform kann zwischen Abdeckung 52 und Hülse 12 eine dichte Schweiss- oder Klebeverbindung vorgesehen sein.

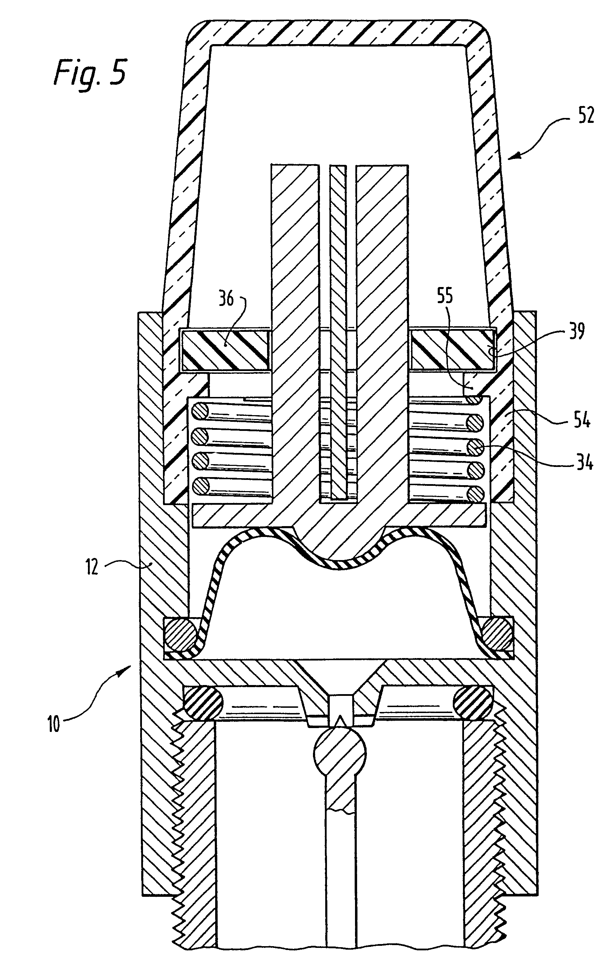

Die Fig. 5 zeigt eine weitere Ausführungsform einer erfindungsgemässen Ventilkappe 10, bei welcher die hutartige Abdeckung 52 mit ihrem Rohrteil 54 an der Innenseite des oberen Abschnittes der Hülse 12 dicht anliegt. Zur Erhöhung der Dichtigkeit ist vorzugsweise eine Schweissverbindung vorgesehen, die beispielsweise durch Ultraschallschweissung erzeugt werden kann. In der Innenwand des Rohrteiles 54 ist die umlaufende Nut 39 ausgespart, welche den elastischen Ring 36 aufnimmt und festhält. Unterhalb der Nut 39 steht ein Ansatz 55 von der Innenwand des Rohrteiles 54 nach innen weg und bildet den weiteren Federsitz für die Feder 34. Auf diese Weise ist der elastische Ring 36 vom Druck der Feder 34 entlastet, was die Führung des Anzeigegliedes 40 und das Festhalten des Markierungsgliedes 46 verbessert.

Die hutartige Abdeckung 52 besteht aus dem Rohrabschnitt 54, an den sich einstückig der geschlossene Hutabschnitt 56 anschliesst. Wie dargestellt, weist der Hutabschnitt 56 die Gestalt eines Hohlkegelabschnittes auf, der sich in Richtung auf den Rohrabschnitt 54 hin geringfügig erweitert. Die gesamte Abdeckung 52 besteht aus klarem, durchsichtigem Kunststoff.

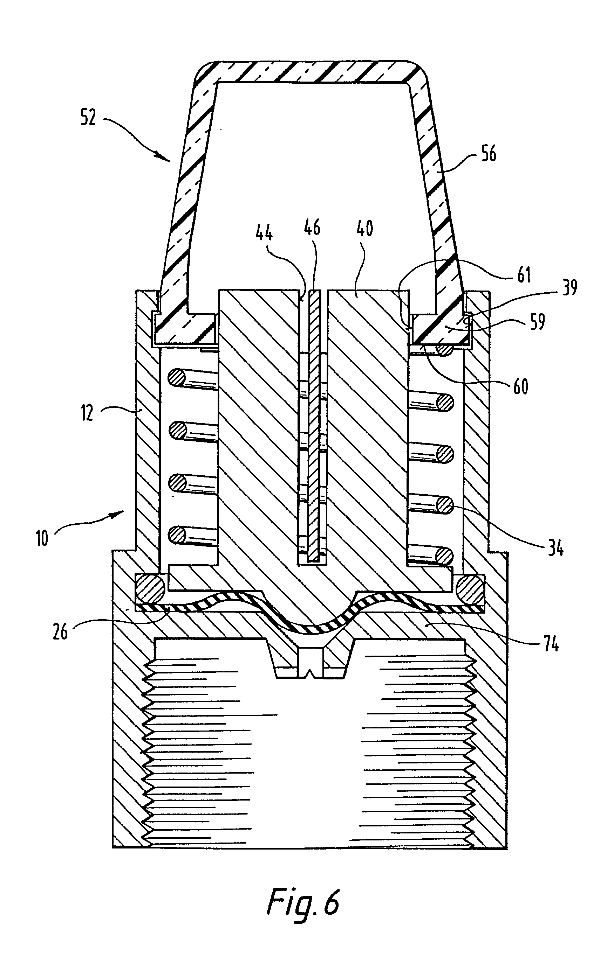

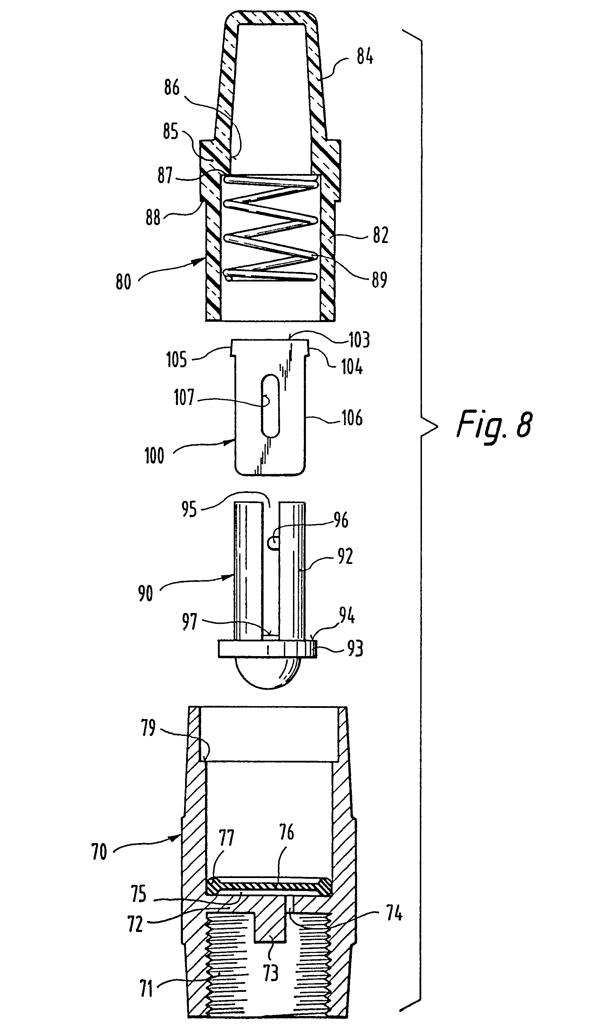

Die Fig. 6 und 7 zeigen noch eine weitere Ausführungsform einer erfindungsgemässen Ventilkappe 10. Hier besteht die hutförmige Abdeckung 52 im wesentlichen nur aus dem geschlossenen Hohlkegelabschnitt 56, dessen verbreiterter Fuss 59 im Klemmsitz in die umlaufende Nut 39 an der Innenwand des Hülsenoberteiles 12 eingreift. Zum Einsetzen wird der Hohlkegelabschnitt 56 elastisch verformt, und der Fuss 59 in die Nut 39 eingeführt. Zur Erhöhung der Dichtigkeit kann bei Bedarf zusätzlich eine Schweissverbindung zwischen dem Hülsenmaterial und dem Fussmaterial vorgesehen werden. Die Unterseite 60 des Fusses 59 bildet einen Sitz für die Feder 34. Die Innenseite 61 des Fusses 59 bildet eine Führung für das Anzeigeglied 40 und das Markierungsglied 46.

Bei dieser Ausführungsform bildet die Innenwand des Hohlkegelaschnittes 56 die Rückbewegungssperre für das Markierungsglied 46, wie das schematisch anhand der Fig. 7 angedeutet ist. Wiederum ist das Markierungsglied 46 ein dünnes Plättchen mit wesentlichen rechteckiger Gestalt, das im Schlitz 44 im Anzeigeglied 40 verschieblich gehalten ist. Abweichend stehen im oberen Abschnitt zwei Ansätze 62 und 63 (vgl. Fig. 7) über die mittlere Breite des Markierungsgliedes 46 vor, so dass die aus Fig. 7 ersichtliche, angenähert T-förmige Gestalt für das Markierungsglied 46 resultiert. Die Neigung der Seitenkante 64 der Ansätze 62 und 63 kann an die Neigung des Hohlkegelabschnittes 56 angepasst sein.

Die Fig. 6 zeigt die Ventilkappe 10 entfernt von einem Reifenventil. Die Membran 26 liegt an der Querwand 14 an; die Oberkante des Anzeigegliedes 40 und des Markierungsgliedes 46 schliessen im wesentlichen mit dem oberen Rand der Hülse 12 ab. Sobald nach dem Aufschrauben der Ventilkappe auf ein Reifenventil in der Druckluftkammer der Reifensolldruck herrscht, rückt die Membran 26 das Anzeigeglied 40 nach aussen, wobei der Boden des Spaltes 44 das Markierungsglied 46 mitführt. In seiner, dem Reifensolldruck entsprechenden Stellung drückt das Anzeigeglied 40 die Ansätze 62 und 63 des Markierungsgliedes 46 gegen die Innenwand des Hohlkegelabschnittes 56, wo sie im Klemmsitz bzw. Reibschluss festgehalten werden. In diesem Falle übernimmt die Innenwand der hutartigen Abdeckung die Funktion der Rückbewegungssperre. Bei einer gegebenenfalls auftretenden Minderung des Reifendruckes schiebt die Feder 34 das Anzeigeglied 40 wieder teilweise zurück, während das Markierungsglied 46 vom Hohlkegelabschnitt 56 weiterhin in seiner Ausgangsstellung festgehalten wird. Sofern das gesamte Anzeigeglied 40 beispielsweise aus schwarzem Kunststoff besteht, und das Markierungsglied 46 ebenfalls aus schwarzem Material besteht, jedoch auf seinen Seitenflächen einschl. der Ansätze 62 und 63 einen weissen Anstrich trägt, legt das Zurückführen des Anzeigegliedes 40 ein weisses Band am festgehaltenen Markierungsglied 46 frei, das bereits in einer Breite von wenigen 1/10 mm durch die durchsichtige Abdeckung 52 hindurch gut sichtbar ist und gegebenenfalls auftretenden Reifendruckabfall anzeigt. Ein optisch gut wahrnehmbarer Kontrast wurde auch mit einem roten Markierungsglied gegenüber einem grünen Anzeigeglied erzielt.

Die Fig. 8 zeigt eine weitere, derzeit besonders bevorzugte Ausführungsform einer erfindungsgemässen Ventilkappe, wobei einzelne Bauteile auseinandergezogen dargestellt sind. Die Hülse 70 ist in ihrem unteren Abschnitt mit einem Innengewinde 71 versehen, um die gesamte Ventilkappe auf das Ventil eines Luftreifens aufzuschrauben. In der aufgeschraubten (Arbeits-) Stellung betätigt das von der Querwand 72 nach unten abstehende Betätigungsglied 73 eine innerhalb des Ventilrohres befindliche Ventilstange, so dass der Reifendruck über eine seitlich zum Betätigungsglied 73 angbrachte, durch die Querwand 72 hindurchführende Bohrung 74 in die darüber befindliche Druckluftkammer 75 weitergeleitet werden kann. Diese Druckluftkammer 75 wird einerseits von der Querwand 72 und andererseits von der Membran 76 begrenzt. Diese im wesentlichen kreisrunde Membran 76 weist an ihrem Rand einen Wulst 77 auf. Im zusammengebauten Zustand wird dieser Wulst 77 vom Ende des Rohrabschnittes 82 der hutartigen Abdeckung 80 gegen die Querwand 72 gedrückt, so dass die Membran dort druckdicht anliegt. Oberhalb der Querwand 72 weist die Innenwand der Hülse 70 eine Abstufung 79 auf, um die hutartige Abdeckung 80 exakt zu positionieren.

Die Hülse 70 kann ein Spritzgusskörper aus zähem, schlagfestem Kunststoff wie beispielsweise hochdichtes Polyäthylen sein.

Die hutartige Abdeckung 80 besteht aus dem Rohrabschnitt 82 und dem einstückig damit verbundenen, geschlossenen Hutabschnitt 84. Die gesamte Abdeckung 80 besteht aus klarem, durchsichtigem Material, beispielsweise einem bekannten Polyacrylat. Im Bereich des Ansatzes des Hutabschnittes 84 an dem Rohrabschnitt 82 steht von dem letzteren ein umlaufender Vorsprung 85 nach innnen vor, dessen Innenwand 86 als Führung für den Stangenabschnitt 92 des Anzeigegliedes 90 dient. Die Unterseite 87 des Vorsprunges 85 bildet den einen Federsitz für die Feder 89. Die Aussenwand des Rohrabschnittes 82 weist eine vorspringende Schulter 88 auf, welche beim Einsetzen der Abdeckung 80 in die Hülse 70 auf der Abstufung 79 in deren Innenwand zur Anlage kommt. Nach dem fertigen Zusammenbau aller Bauteile erfolgt in diesem Bereich eine Ultraschallverschweissung zwischen Hülse 70 und Abdeckung 80.

Das Markierungsglied 90 besteht aus dem Stangenabschnitt 92 und dem an dessen Unterseite einstückig angeformten Teller 93, wobei die Oberseite 94 des vorstehenden Tellerrandes den anderen Sitz für die Feder 89 bildet. Längs des grösseren Längenabschnittes des Stangenabschnittes 92 ist in dessen axialer Richtung ein Schlitz 95 ausgespart. Von der einen Schlitzwand ragt eine Nase 96 bis nahe an die andere Schlitzwand heran. Anstelle der Nase 96 könnte alternativ ein den Schlitz 95 überbrückender Stift vorgesehen werden, der in fluchtenden Bohrungen in den Schlitzwänden festgelegt ist. Der Schlitz 95 weist eine ausreichende Breite auf, damit das als dünnes Plättchen ausgebildete Markierungsglied 100 innerhalb des Schlitzes leicht verschlieblich ist. Im zusammengebauten Zustand ruht das Markierungsglied 100 mit seiner Unterkante auf dem Boden 97 des Schlitzes 95 und wird bei einer Druckbeaufschlagung der Druckkammer 75 gemeinsam mit dem Anzeigeglied 90 in axialer Richtung bezüglich der Hülse 70 auf die hutartige Abdeckung 80 zu verschoben.

Das Markierungsglied 100 besteht aus einem dünnen Plättchen von im wesentlichen rechteckiger Gestalt. Im Bereich seiner Oberkante 103 stehen beidseitig zwei Ansätze 104 und 105 geringfügig über die Längskante 106 vor. Mit diesen Ansätzen 104 und 105 wird das in seine Ausgangsstellung gebrachte Markierungsglied 100 im Reibschluss an der Innenwand des Hohlkegelabschnittes 84 auch dann gehalten, wenn auf eine Druckminderung in der Druckluftkammer 75 hin die Feder 89 das Anzeigeglied 90 teilweise zurückgeführt hat, wie das bereits oben im einzelnen mit Bezugnahme auf Fig. 7 erläutert ist. Innerhalb des Markierungsgliedes 100 ist das Langloch 107 ausgespart, in welches die Nase 96 hineinragt, nachdem das Markierungsglied 100 in den Schlitz 95 des Anzeigegliedes 90 eingesetzt ist.

Die Feder 89 ist vorzugsweise als Spiralfeder ausgebildet und weist einen solchen Windungsumfang auf, dass die Feder mit Spiel einerseits in den Rohrschnitt 82 der Abdeckung 80 eingesetzt werden kann, und andererseits mit Spiel den Stangenabschnitt 92 des Anzeigegliedes 90 umgibt. Für eine beispielhafte Ausführungsform ist eine solche Abstimmung von Membran 76 und Feder 89 vorgesehen, dass eine Änderung des in der Druckluftkammer 75 herrschenden Druckes um 0,1 bar das Anzeigeglied 90 um etwa 0,05 bis 0,20 mm verstellt.

Wie dargelegt, schafft die vorliegende Erfindung eine Ventilkappe für Luftreifen, welche eine Druckminderung im Luftreifen optisch anzuzeigen vermag. Die Anwendung der Ventilkappe ist äusserst einfach, weil diese lediglich auf das Ventil des Luftreifens aufgeschraubt werden muss. Daraufhin nehmen Anzeigeglied und Markierungsglied selbsttätig ihre Ausgangsstellung ein. Dank der extremen Vereinfachung ist eine absolute Zuverlässigkeit dieser Ventilkappe — auch unter schlechtesten Wetterbedingungen — und höchsten Fahrgeschwindigkeiten von 200 km/h und mehr gegeben, wie Langzeiterprobungen erwiesen haben. Die erfindungsgemässe Ventilkappe erfüllt die Anforderungen nach DIN 7780 für Ventile für Druckluftreifen. Die extreme Vereinfachung und die geringe Anzahl getrennter selbständiger Bauteile erlaubt die Herstellung und den Zusammenbau solcher Ventilkappen in Massenproduktion zu minimalen Kosten.

Wie oben dargelegt, ist die Erfindung im einzelnen mit Bezugnahme auf bevorzugte Ausführungsformen erläutert worden. Für Fachleute ist ersichtlich, dass verschiedene Abänderungen und Modifizierungen dieser erläuterten Ausführungsformen vorgenommen werden können, ohne vom wesentlichen Konzept der Erfindung abzuweichen. So könnte beispielsweise das Anzeigeglied einstückig mit der Membran bzw. dem Kolben ausgebildet sein. Insbesondere eine einstückige Ausbildung von Anzeigeglied und Kolben verspricht Vorteile, weil ein weiteres, selbständiges Bauteil eingespart werden kann, ohne dass eine Beeinträchtigung der Funktionstüchtigkeit befürchtet werden muss.

Auch derartige und weitere, für Fachleute auf diesem Gebiet nach Studium vorstehender Unterlagen erkennbare Abänderungen und Modifizierungen der erläuterten Ausführungsformen sollen von der vorliegenden Erfindung umfasst sein, solange sie sich unter den Gegenstand der nachstehenden Patentansprüche subsummieren lassen.

## Patentansprüche

1. Ventilkappe für Luftreifen, mit einer auf ein Ventilrohr (18) aufschraubbaren Hülse (12, 70), die ein Betätigungsglied (22, 73) aufweist, welches in der aufgeschraubten (Arbeits-) Stellung der Hülse ein im Ventilrohr eingebautes Ventil zu öffnen vermag, mit einer, mit dem Reifeninneren über das offene Ventil kommunizierenden Druckluftkammer (30, 75), die durch eine bewegliche Membran (26, 76) oder einen Kolben gegenüber dem Umgebungsdruck abdichtbar ist, die bzw. der ein Anzeigeglied (40, 90) betätigt, dem ein relativ hierzu bewegbares Markierungsglied (46, 100) zugeordnet ist, und ferner mit einer in Richtung auf das Betätigungsglied vorgespannten, mit dem Anzeigeglied zusammenwirkenden Feder (34, 89), dadurch gekennzeichnet, dass bei einer Druckerhöhung in der Druckluftkammer (30, 75) das Anzeigeglied (40, 90) eine axiale Verschiebung gegenüber der Hülse (12, 70) ausführt, und hierbei das Markierungsglied (46, 100) mitnehmbar ist; und eine Rückbewegungssperre (36) das Markierungsglied (46, 100) bei einer Druckminderung in der Druckluftkammer (30, 75) in seiner Stellung gegenüber der Hülse (12, 70) festhält, während das Anzeigeglied (40, 90) in axialer Richtung gegenüber der Hülse (12, 70) auf das Betätigungsglied (22, 73) zu verschoben wird.

2. Ventilkappe nach Anspruch 1, dadurch gekennzeichnet, dass die Rückbewegungssperre (36) als Bremse ausgebildet ist.

3. Ventilkappe nach Anspruch 2, dadurch gekennzeichnet, dass die als Bremse ausgebildete Rückbewegungssperre aus einem Ring (36) besteht, durch den das Anzeigeglied (40) mit Spiel, das Markierungsglied (46) jedoch mit Reibschluss hindurchragen.

4. Ventilkappe nach Anspruch 3, dadurch gekennzeichnet, dass der Ring (36) aus elastisch verformbarem Material besteht.

5. Ventilkappe nach Anspruch 3 oder 4, dadurch gekennzeichnet, dass der Ring (36) die Hülse (12) stirnseitig abschliesst.

6. Ventilkappe nach einem der Ansprüche 1 bis 5, dadurch gekennzeichnet, dass das zum Ventil entfernt angeordnete Ende der Hülse (12, 70) durch eine hutartige, das Ausrücken von Anzeigeglied (40, 90) und Markierungsglied (46, 100) zulassende Abdeckung (52, 80) aus durchsichtigem Material dicht verschlossen ist; und bei völliger Druckentlastung der Druckluftkammer (30, 75) eine Rückstellmöglichkeit des Markierungsgliedes (46, 100) gegeben ist.

7. Ventilkappe nach Anspruch 6, dadurch gekennzeichnet, dass die Abdeckung (52, 80) einen Hutabschnitt (56, 84) und einen einstückig damit verbundenen Rohrabschnitt (54, 82) aufweist; und dieser Rohrabschnitt (54, 82) in die Hülse (12, 70) einsetzbar ist.

8. Ventilkappe nach Anspruch 7, dadurch gekennzeichnet, dass die Aussenwand des Rohrabschnittes (54, 82) und die Innenwand der Hülse (12, 70) wenigstens in einer umlaufenden Ringzone miteinander verschweisst sind.

9. Ventilkappe nach Anspruch 7 oder 8, dadurch gekennzeichnet, dass an dem Rohrabschnitt (54, 82) ein nach innen vorspringender Federsitz (55, 85) ausgebildet ist.

10. Ventilkappe nach einem der Ansprüche 7 bis 9, dadurch gekennzeichnet, dass das offene Ende des Rohrabschnittes (82) einen Randwulst (77) der Membran (76) gegen eine Querwand (73) der Hülse (70) drückt.

11. Ventilkappe nach einem der Ansprüche 7 bis 10, dadurch gekennzeichnet, dass der Hutabschnitt (56, 84) im wesentlichen die Gestalt eines sich in Richtung auf den Rohrabschnitt (54, 82) hin geringfügig erweiternden Hohlkegelabschnittes auf weist.

12. Ventilkappe nach einem der Ansprüche 7 bis 11, dadurch gekennzeichnet, dass die Innenwand des Hutabschnittes (56, 84) die Funktion der Rückbewegungssperre ausübt.

13. Ventilkappe nach einem der Ansprüche 6 bis 12, dadurch gekennzeichnet, dass die bei völliger Druckentlastung der Druckluftkammer (30, 75) erfolgende Verstellung des Anzeigegliedes (40, 90) auch eine wenigstens teilweise Rückführung des Markierungsgliedes (46, 100) bewirkt.

14. Ventilkappe nach einem der Ansprüche 1 bis 13, dadurch gekennzeichnet, dass das Anzeigeglied (40, 90) im wesentlichen als Stangenabschnitt (92) ausgebildet ist, der an einem Ende einen als Federsitz dienenden, vorspringenden Tellerrand (32, 94) aufweist; in axialer Richtung im Stangenabschnitt (92) ein Schlitz (44, 95) ausgespart ist; und in diesen Schlitz (44, 95) ein gegenüber dem Stangenabschnitt (92) in axialer Richtung verschiebliches Plättchen (46, 100) eingesetzt ist, das als Markierungsglied dient.

15. Ventilkappe nach Anspruch 14, dadurch gekennzeichnet, dass das plättchenförmige Markierungsglied (46) mit seinen beiden parallelen Längsrändern über den Axialschlitz (44) hervorsteht; und diese hervorstehenden Randabschnitte im Reibschluss (48, 50) an der Innenbohrung des Ringes (36) zur Anlage bringbar sind.

16. Ventilkappe nach Anspruch 15, dadurch gekennzeichnet, dass die Länge des Markierungsgliedes (46) mit der Länge des Axialschlitzes (44) übereinstimmt.

17. Ventilkappe nach Anspruch 14, dadurch gekennzeichnet, dass die Abmessungen des plättchenförmigen Markierungsgliedes (46, 100) im wesentlichen der Breite und Länge des Schlitzes (44, 95) entsprechen; dieses Plättchen (46, 100) jedoch im Bereich seiner Oberkante (103) zwei gegenüberliegende, über den Stangenabschnitt-Querschnitt vorstehende Ansätze (62 und 63 bzw. 104 und 105) aufweist; und diese Ansätze (62, 63; 104, 105) im Reibschluss an der Innenwand des Hohlkegelabschnittes (56, 84) zur Anlage bringbar sind.

18. Ventilkappe nach Anspruch 17, dadurch gekennzeichnet, dass innerhalb des Plättchens (100) ein Langloch (107) ausgespart ist; und in dieses Langloch (107) eine in den Schlitz (95) hineinragende Nase (92) oder ein diesen Schlitz überbrückender Stift hineinragt.

19. Ventilkappe nach einem der Ansprüche 1 bis 18, dadurch gekennzeichnet, dass die Membran bzw. der Kolben auf ein Stellglied einwirkt, das seinerseits das Anzeigeglied betätigt.

20. Ventilkappe nach Anspruch 19, dadurch gekennzeichnet, dass das Stellglied funktionell oder kraftschlüssig mit der Membran bzw. dem Kolben verbunden ist.

21. Ventilkappe nach Anspruch 19, dadurch gekennzeichnet, dass das Stellglied einstückig mit dem Anzeigeglied verbunden ist.

22. Ventilkappe nach einem der Ansprüche 1 bis 21, dadurch gekennzeichnet, dass das Betätigungsglied ein innerhalb der Hülse (12, 70) fest angebrachter Vorsprung (22, 73) ist, der in der aufgeschraubten (Arbeits-) Stellung der Hülse (12, 70) das im Ventilrohr eingebaute Ventil ständig offenhält.

23. Ventilkappe nach einem der Ansprüche 1 bis 21, dadurch gekennzeichnet, dass das Betätigungsglied ein in axialer Richtung verschieblich innerhalb der Hülse angeordneter Zapfen ist, dessen Betätigung — in der aufgeschraubten (Arbeits-) Stellung der Hülse — das im Ventilrohr eingebaute Ventil öffnet.

**Claims**

1. A valve cap for pneumatic tires, comprising a sleeve (12, 70) being screwable on a valve tube (18); an actuating member (22, 73) adapted to open a valve provided in said valve tube when said sleeve is screwed on said valve tube; a compressed-air chamber (30, 75) communicating with the interior of the tire through the open valve, and including a movable diaphragm (26, 76) or a movable piston sealing said compressed-air chamber relative to ambient pressure; an indicator member (40, 90) being actuated by said diaphragm (26, 76) or piston; a marking member (46, 100) being movable relative to and related to said indicator member; and further comprising a spring (34, 89) cooperating with said indicator member and being biased toward the actuating member, characterized in that the indicator member (40, 90) caused by an increase in pressure in the compressed-air chamber will move axiallly relative to said sleeve (12, 70) and driving said marking member (46, 100); and further comprising a return movement inhibitor member (36) retaining said marking member (46, 100) in its position relative to the sleeve (12, 70) at a pressure decrease in said compressed-air chamber (30, 75), wherein a pressure decrease in said compressed-air chamber (30, 75) moving said indicator member (40, 90) axially relative to the sleeve (12, 40) towards to said actuating member (22, 73).

2. The valve cap according to claim 1, wherein said return movement inhibitor member (36) is configured as a brake.

3. The valve cap according to claim 2, wherein the return movement inhibitor configured as a brake comprises a ring (36) through which said indicator member (40) extends with a clearance whereas said marking member (46) extends therethrough in frictional engagement.

4. The valve cap according to claim 3, wherein said ring (36) is made from an elastically deformable material.

5. The valve cap according to claim 3 or 4, wherein said ring (36) closes an end face of said sleeve (12).

6. The valve cap according to any one of the claims 1 to 5, wherein a hat-shaped cover (52, 80) made from a transparent material hermetically sealing an end of said sleeve (12, 70) being remote from said valve while permitting extension of said indicator member (40, 90) and of said marking member (46, 100); and said marking member (46, 100) may be returned upon complete pressure relief of said compressed-air chamber (30, 75).

7. The valve cap according to claim 6, wherein said cover (52, 80) comprises a hat portion (56, 84) and a tubular portion (54, 82) integrally formed therewith; and said tubular portion (54, 82) is insertable into said sleeve (12, 70).

8. The valve cap according to claim 7, wherein an outer wall of said tubular portion (54, 82) and an inner wall of said sleeve (12, 70) being welded to each other at least in a continuous annular zone.

9. The valve cap according to claim 7 or 8, wherein said tubular portion (54, 82) is formed with an inwardly projecting spring seat (55, 85).

10. The valve cap according to any one of the claims 7 to 9, wherein said diaphragm (76) comprises a peripheral bead; and an open end of said tubular portion (54, 82) urges said peripheral bead of said diaphragm against a transverse wall (73) of said sleeve (70).

11. The valve cap according to any one of the claims 7 to 10, wherein said hat portion (56, 84) substantially has the configuration of a hollow cone portion slightly flaring towards said tubular portion (54, 82).

12. The valve cap according to any one of the claims 7 to 11, wherein an inner wall of said hat portion (56, 84) serves as return movement inhibitor.

13. The valve cap according to any one of the claims 6 to 12, wherein the displacement of said indicator member (40, 90) occurring upon complete pressure relief of said compressed-air chamber (30, 75) causes also an at least partial return of said marking member (46, 100).

14. The valve cap according to any one of the claims 1 to 13, wherein said indicator member (40, 90) essentially is configured as a rod portion (92) comprising at one end thereof a projecting disc edge (32, 94) serving as a spring seat; said rod portion (92) including a slot (44, 95) extending axially thereof; and a small plate (46, 100) serving as marking member being axially movable relative to said rod portion (92) and being disposed within said slot (44, 95).

15. The valve cap according to claim 14, wherein said marking member in the form of a small plate (46) includes two parallel longitudinal edges projecting beyond the axial slot (44); and said projecting edges being adapted to frictionally engage (see reference No. 48, 50 in Fig. 3) at the inner bore of the ring (36).

16. The valve cap according to claim 15, wherein the length of said marking member (46) corresponds te the length of said axial slot (44).

17. The valve cap according to claim 14, wherein the dimensions of said marking member on the form of a small plate (46, 100) correspond essentially to the width and the length of said slot (44, 95); and said small plate (46, 100) comprises in the region of its upper edge (103) two opposed extensions (62 and 63, 104 and 105) projecting beyond the cross-section of said rod portion; and said extensions (62, 63; 104, 105) being adapted to frictionally engage the inner wall of said hollow cone portion 56, 84).

18. The valve cap according to claim 17, wherein an elongated slot (107) being formed within said small plate (100); and a projection (95) in a form of nose or a pin (92) being extending into said elongated slot (107).

19. The valve cap according to any one of the claims 1 to 18, wherein said diaphragm or said piston being acting on a actuating element which in turn is actuating said indicating member.

20. The valve cap according to claim 19, wherein said actuating element is operatively or non-positively connected with said diaphragm or said piston.

21. The valve cap according to claim 19, wherein said actuating element is formed integrally with said indicating member.

22. The valve cap according to any one of the claims 1 to 21, wherein said actuating member comprises a projection (22, 73) being fixedly arranged within said sleeve (12, 70) and always keeping the valve mounted in the valve tube in its open position when said sleeve (12, 70) being mounted on said valve tube.

23. The valve cap according to any one of the claims 1 to 21, wherein said actuating member comprises a pin being arranged axially movable within said sleeve; and an actuation of said pin will open a valve mounted in said valve tube when said sleeve being mounted on said valve tube.

## Revendications

1. Chapeau de valve de pneumatique, comprenant: une douille (12, 70) se vissant sur un tube de valve (18) et comportant un élément de manoeuvre (22, 73) qui peut, lorsque la douille est en la position vissée (de travail), ouvrir une valve montée dans le tube de valve, une chambre à air comprimé (30, 75), qui communique avec l'intérieur du pneumatique par la valve ouverte et qui peut être rendue étanche vis-à-vis de la pression ambiante par une membrane (26, 76) mobile ou par un piston actionnant un élément indicateur (40, 90) auquel est associé un élément de repérage (46, 100) mobile par rapport à l'élément indicateur, et en outre, un ressort (34, 89) mis préalablement sous tension dans le sens de l'élément de manoeuvre et coopérant avec l'élément indicateur, caractérisé en ce que lors de l'élévation de la pression dans la chambre à air comprimé (30, 75), l'élément indicateur (40, 90) coulisse axialement par rapport à la douille (12, 70) en entraînant l'élément de repérage (46, 100); et und dispositif d'arrêt (36) empêchant tout mouvement de recul maintient l'élément de repérage (46, 100) en sa positon par rapport à la douille (12, 70) lors d'une diminution de la pression dans la chambre à air comprimé (30, 75), tandis que l'élément indicateur (40, 90) coulisse en direction axiale par rapport à la douille (12, 70) sur l'élément de manoeuvre (22, 73).

2. Chapeau de valve suivant la revendication 1, caractérisé en ce que, le dispositif d'arrêt (36) empêchant tout mouvement de recul est constitué en frein.

3. Chapeau de valve suivant la revendication 2, caractérisé en ce que, le dispositif d'arrêt empêchant tout mouvement de recul agencé en frein est constitué d'un anneau (36) qui y passe avec jeu, tandis que l'élément de repérage (46) y passe avec frottement.

4. Chapeau de valve suivant la revendication 3, caractérisé en ce que, l'anneau (36) est en un matériau déformable élastiquement.

5. Chapeau de valve suivant la revendication 3 ou 4, caractérisé en ce que, l'anneau (36) ferme la douille (12) du côté frontal.

6. Chapeau de valve suivant d'une des revendications 1 à 5, caractérisé en ce que, l'extrémité de la douille (12, 70), qui est élognée de la valve, est fermée d'une manière étanche par un couvercle (52, 80) de type à chapeau en matériau transparent et permettant de désaccoupler l'élément indicateur (40, 90) et l'élément de repérage (46, 100); et lorsque la chambre à air comprimé (30, 75) n'est plus du tout sous pression, il y a une possibilité de rappel de l'élément de repérage (46, 100).

7. Chapeau de valve suivant la revendication 6, caractérisé en ce que, le couvercle (52, 80) comporte une section (56, 84) en forme de chapeau et, d'une pièce avec celle-ci, une section tubulaire (54, 82); et cette section tubulaire (54, 82) peut être enfilée dans la douille (12, 70).

8. Chapeau de valve suivant la revendication 7, caractérisé en ce que, la paroi extérieure de la section tubulaire (54, 82) et la paroi intéreure de la douille (12, 70) sont soudées l'une à l'autre au moins dans une zone annulaire continue.

9. Chapeau de valve suivant la revendication 7 ou 8, caractérisé en ce que, sur la section annulaire (45, 82) est constitué un appui de ressort (55, 85) faisant saillie vers l'intérieur.

10. Chapeau de valve suivant l'une des revendications 7 à 9, caractérisé en ce que, l'extrémité ouverte de la section tubulaire (82) repousse un bourrelet marginal (77) de la membrane (76) sur une paroi transversale (73) de la douille (70).

11. Chapeau de valve suivant l'une des revendications 7 à 10, caractérisé en ce que, la section en forme de chapeau (56, 84) affecte essentiellement la forme d'une section conique creuse s'évasant légèrement en direction de la section tubulaire (54, 82).

12. Chapeau de valve suivant l'une des revendications 7 à 11, caractérisé en ce que, la paroi intérieure de la section en forme de chapeau (56, 84) exerce la fonction du dispositif d'arrêt empêchant tout mouvement de recul.

13. Chapeau de valve suivant l'une des revendications 6 à 12, caractérisé en ce que, le déplacement de l'organe indicateur (40, 90), qui se produit lorsque la chambre à air comprimé (30, 75) n'est plus du tout sous pression, provoque aussi un retour au moins partiel de l'élément de repérage (46, 100).

14. Chapeau de valve suivant l'une des revendications 1 à 13, caractérisé en ce que, l'élément indicateur (40, 90) est constitué essentiellement par une partie en forme barrette (92) qui présente, à une extrémité, un rebord formant plateau (32, 94) en saillie et servant de siège à un ressort; une fente (44, 95) est ménagée en direction axiale dans la partie en forme de barrette (92); et dans cette fente (44, 95) est introduite une plaquette (46, 100) qui coulisse en direction axiale par rapport à la partie en forme de barrette (92) et qui sert d'élément de repérage.

15. Chapeau de valve suivant la revendication 14, caractérisé en ce que, l'élément de repérage (46) en forme de plaquette fait saillie par ses bords parallèles longitudinaux de la fente axiale (44); et ces sections marginales en saillie peuvent venir en contact de frottement (48, 50) avec l'intérieur de l'anneau (36).

16. Chapeau de valve suivant la revendication 15, caractérisé en ce que, la longueur de l'élément de repérage (46) concorde avec la longueur de la fente axiale (44).

17. Chapeau de valve suivant la revendication 14, caractérisé en ce que, les dimensions de l'élément de repérage (46, 100) en forme de plaquette correspondent sensiblement à la largeur et à la longueur de la fente (44, 95); mais cette plaquette comporte, dans la région de son bord supérieur (103), deux appendices (62 et 63 ou 104 et 105) opposés, en saillie de la section transversale de la partie en forme de barrette; et ces appendices (62, 63; 104, 105) peuvent venir en contact de frottement avec la paroi entérieure de la section conique creuse (56, 84).

18. Chapeau de valve suivant la revendication 17, caractérisé en ce que, une boutonnière (107) est ménagée dans la plaquette (100); et un bec (96) faisant saillie dans la fente (95) ou une tige recouvrant cette fente pénètre dans cette boutonnière (107).

19. Chapeau de valve suivant l'une des revendications 1 à 18, caractérisé en ce que, la membrane ou le piston agit sur un élément de réglage qui manoeuvre de son côté l'élément indicateur.

20. Chapeau de valve suivant la renvendication 19, caractérisé en ce que, l'élément de réglage est relié fonctionnellement ou positivement à la membrane ou au piston.

21. Chapeau de valve suivant la revendication 19, caractérisé en ce que, l'élément de réglage est d'une pièce avec l'élément indicateur.

22. Chapeau de valve suivant l'une des revendications 1 à 21, caractérisé en ce que, l'élément de manoeuvre est une partie saillante (22, 73) qui est fixée solidement à l'intérieur de la douille (12, 70) et qui, lorsque la douille (12, 70) est en la position vissée (de travail), maintient constamment ouverte la valve montée dans le tube de valve.

23. Chapeau de valve suivant l'une des revendications 1 à 21, caractérisé en ce que, l'élément de manoeuvre est un tenon qui est monté coulissant en direction axiale dans la douille et qui, lorsqu'il est manoeuvré — alors que la douille est en la position vissée (de travail) — ouvre la valve montée dans le tube de valve.

*Fig. 1*

Fig. 2

*Fig.3*

*Fig.7*

*Fig. 4*

Fig. 5

*Fig.6*

Fig. 8